# EUROPEAN PATENT APPLICATION

(11) **EP 3 565 049 A1**
(43) Date of publication of application: **06.11.2019**
(21) Application number: 17887917.7
(22) Date of filing: 25.12.2017
(51) Int. Cl.: H01M 8/18, H01M 8/04

(54) **REDOX-FLOW BATTERY SYSTEM AND OPERATING METHOD THEREOF**

(30) Priority: 28.12.2016 JP 2016256158
(71) Applicant: Showa Denko K.K., Tokyo 105-8518 (JP)
(72) Inventor: ZHOU, Tingting, Tokyo 105-8518 (JP); TOMITA, Miyuki, Tokyo 105-8518 (JP)
(74) Representative: Strehl Schübel-Hopf & Partner
(86) International application number: PCT/JP2017/046417
(87) International publication number: WO 2018/123963

(57) **Abstract**

Provided is a redox-flow battery system, etc., for which even when using a high concentration vanadium electrolyte, it is possible to stably obtain high energy density and battery capacity based on that concentration. The present invention is a redox-flow battery system 1 for performing charge and discharge by circulating an electrolyte that contains vanadium as an active material in a battery cell 2, wherein the electrolyte contains a dissolved vanadium compound and a vanadium compound dispersed in particle form, the total of the vanadium concentration of both vanadium compounds is 1.7 mol/L or more, and provided in the circulation route in which the electrolyte solution circulates are particle size adjusting means 16, 26 for adjusting the particle size of the vanadium compound dispersed in particle form to be smaller.

## Description

### TECHNICAL FIELD

The present invention relates to a redox-flow battery system that performs charge/discharge by circulating an electrolyte containing vanadium as an active material to a battery cell, and a method of operating the redox-flow battery system.

### BACKGROUND ART

As an electric power storage battery, development of various batteries has been in progress, and examples thereof include an electrolyte circulation type battery, a so-called redox-flow battery. In the redox-flow battery, a positive-electrode electrolyte and a negative-electrode electrolyte are supplied and circulated to a battery cell including a positive electrode, a negative electrode, and a membrane interposed between both the electrodes, and charge/discharge is performed through an electric power converter (for example, an AC/DC converter or the like). As the electrolytes, an aqueous solution that contains a metal ion (active material) of which a valence number varies through typical redox is used. For example, a vanadium-based redox-flow battery that uses vanadium (V) as the active material is well known.

Typically, in the redox flow battery, the more the amount of the active material in the electrolyte is, the further an energy density increases and the higher battery capacity becomes. For example, Patent Document 1 discloses a high concentration vanadium electrolyte which contains a vanadium compound that is an active material and in which a total of vanadium concentration of the active materials is more than 2.5 mol/L. As the active material, a fine dispersoid having a diameter of 100 µm or less is contained.

Patent Document 1: Japanese Patent No. 5860527

### DISCLOSURE OF THE INVENTION

### Problems to be Solved by the Invention

However, when repetitive charge/discharge is performed by using the high concentration vanadium electrolyte, a vanadium compound in the electrolyte gradually precipitates into a battery cell or the electrolyte, and forms bulk precipitates through crystal growth in some cases. According to this, there is a problem that the inside of the battery cell is clogged with the precipitates, and thus it is difficult to maintain flowability of the electrolyte and an energy density and a battery capacity decrease. In addition, when crystal growth of the precipitates progresses, and a ratio of an active material that is less likely to participate in an electrode reaction increases in a short time, there is a problem that the energy density and the battery capacity greatly decrease.

In Patent Document 1, with regard to the vanadium compound that is an active material, a fine dispersoid having a diameter of 100 µm or less is contained as the active material to realize the high concentration vanadium electrolyte. However, an additional improvement is demanded from the viewpoint of suppressing a decrease in the energy density and a decrease in the battery capacity due to crystal growth of precipitates.

An object of the invention is to provide a redox-flow battery system capable of stably obtaining high energy density and battery capacity based on a concentration even in a case of using a high concentration vanadium electrolyte, and a method of operating the redox-flow battery system.

### Means for Solving the Problems

The present inventors have found that when a particle size adjusting means that adjusts a particle size of a vanadium compound dispersed as a particle to be small is disposed in a circulation route of an electrolyte, it is possible to inhibit an energy density and a battery capacity from being decreased, and they have accomplished the invention. More specifically, the invention provides the following configurations.
(1) The invention is a redox-flow battery system that performs charge/discharge by circulating an electrolyte containing vanadium as an active material to a battery cell. The electrolyte includes a vanadium compound that is dissolved, and a vanadium compound that is dispersed as a particle, and a total of vanadium concentration of the vanadium compounds is 1.7 mol/L or more. The redox-flow battery system comprises a particle size adjusting means that is disposed in a circulation route of the electrolyte and adjusts a particle size of the vanadium compound dispersed as a particle to be small.
(2) In addition, the invention is the redox-flow battery system according to (1), wherein the particle size adjusting means adjusts an accumulative 90% particle size (D90) of a volume-based particle size distribution of the vanadium compound dispersed as a particle to 5 µm or less.
(3) In addition, the invention is the redox-flow battery system according to (1) or (2), wherein the circulation route includes an electrolyte tank that stores the electrolyte, an outgoing pipe through which the electrolyte is fed from the tank to the battery cell, and a return pipe through which the electrolyte is returned from the battery cell to the electrolyte tank, and the particle size adjusting means is disposed in at least any one of the outgoing pipe, the return pipe, and the electrolyte tank.
(4) In addition, the invention is the redox-flow battery system according to any one of (1) to (3), wherein, in the electrolyte, a total of vanadium concentration of the vanadium compounds is 2.5 mol/L or more to 4.0 mol/L or less.
(5) In addition, the invention is the redox-flow battery system according to any one of (1) to (4), wherein the particle size adjusting means is a homogenizer.
(6) In addition, the invention is the redox-flow battery system according to any one of (1) to (5), wherein, in the electrolyte, a positive-electrode electrolyte contains one or both of tetravalent and pentavalent vanadium compounds, and a negative-electrode electrolyte contains one or both of divalent and trivalent vanadium compounds.
(7) The invention is a method of operating a redox-flow battery system that performs charge/discharge by circulating an electrolyte containing vanadium as an active material to a battery cell. The electrolyte includes a vanadium compound that is dissolved, and a vanadium compound that is dispersed as a particle, and a total of vanadium concentration of the vanadium compounds is 1.7 mol/L or more. The method comprises a particle size adjusting process of making a particle size of the vanadium compound dispersed as a particle to be small.
(8) In addition, the invention is the method of operating a redox-flow battery system according to (7), wherein, in the particle size adjusting process, an accumulative 90% particle size (D90) of a volume-based particle size distribution of the vanadium compound dispersed as a particle is adjusted to 5 µm or less.

### Effects of the Invention

According to the invention, it is possible to provide a redox-flow battery system capable of stably obtaining high energy density and battery capacity based on a concentration even in a case of using a high concentration vanadium electrolyte, and an operation method thereof.

### BRIEF DESCRIPTION OF THE DRAWINGS

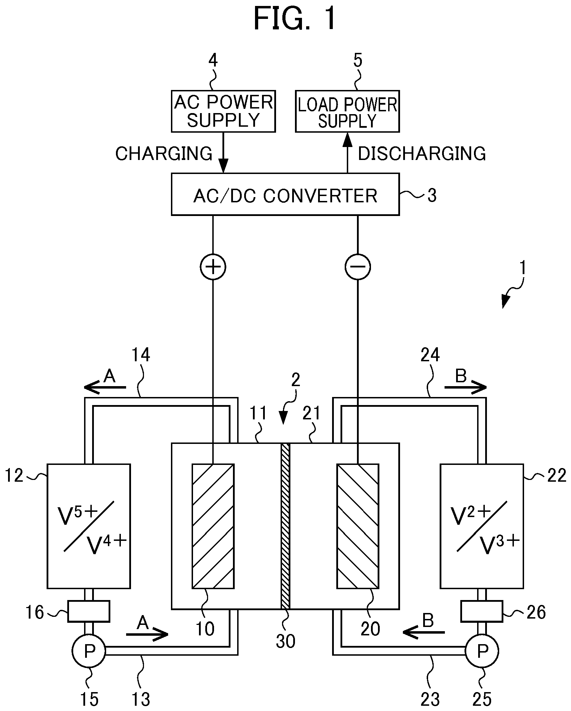

Fig. 1 is a configuration diagram illustrating a configuration of a redox-flow battery system according to an embodiment.

### PREFERRED MODE FOR CARRYING OUT THE INVENTION

Hereinafter, a specific embodiment of the invention will be described in detail with reference to the accompanying drawings. Note that, the invention is not limited to the following embodiment and various modifications can be made in a range not changing the gist of the invention.

### <Redox-Flow Battery System>

Fig. 1 is a configuration diagram illustrating an example of a configuration of a redox-flow battery system according to this embodiment. A redox-flow battery system 1 according to this embodiment uses a battery cell 2 in a single type or in a type called a battery cell stack in which a plurality of sheets of the battery cells 2 are stacked as a minimum unit, and performs charge/discharge by circulating an electrolyte containing vanadium as an active material to the battery cell 2. For example, the redox-flow battery system 1 charges electric power from an AC power supply 4 such as an electric power station through an AC/DC converter 3, and discharges the charged electric power to a power supply for load 5 through the AC/DC converter 3.

As a main configuration, the redox-flow battery system 1 includes the battery cell 2 including a positive-electrode cell 11 in which a positive electrode 10 is embedded, a negative-electrode cell 21 in which a negative electrode 20 is embedded, and a membrane 30 that is interposed between both the electrodes 10 and 20 to isolate the cells, and through which predetermined ions are fed.

In addition, the redox-flow battery system 1 includes a positive-electrode electrolyte tank 12 that stores a positive-electrode electrolyte to be circulated and supplied to the positive-electrode cell 11, a positive-electrode outgoing pipe 13 through which the positive-electrode electrolyte is fed from the positive-electrode electrolyte tank 12 to the positive-electrode cell 11, and a positive-electrode return pipe 14 through which the positive-electrode electrolyte is returned from the positive-electrode cell 11 to the positive-electrode electrolyte tank 12. In the positive-electrode outgoing pipe 13, a pump 15 for circulating the positive-electrode electrolyte, and a particle size adjusting means 16 to be described later are disposed.

Similarly, the redox-flow battery system 1 includes a negative-electrode electrolyte tank 22 that stores a negative-electrode electrolyte to be circulated and supplied to the negative-electrode cell 21, a negative-electrode outgoing pipe 23 through which the negative-electrode electrolyte is fed from the negative-electrode electrolyte tank 22 to the negative-electrode cell 21, and a negative-electrode return pipe 24 through which the negative-electrode electrolyte is returned from the negative-electrode cell 21 to the negative-electrode electrolyte tank 22. In the negative-electrode outgoing pipe 23, a pump 25 for circulating the negative-electrode electrolyte, and a particle size adjusting means 26 to be described later are disposed.

In the redox-flow battery system 1 having the above-described configuration, the electrolyte in the positive-electrode electrolyte tank 12 passes through the positive-electrode outgoing pipe 13 and is fed to the battery cell 2 through the particle size adjusting means 16 when activating the pump 15. The positive-electrode electrolyte fed to the battery cell 2 passes through the inside of the battery cell 2 from a downward side, is discharged to an upward side, and is returned to the positive-electrode electrolyte tank 12 through the positive-electrode return pipe 14. According to this, the positive-electrode electrolyte circulates in an arrow direction A in the drawing. Similarly, the electrolyte in the negative-electrode electrolyte tank 22 passes through the negative-electrode outgoing pipe 23, and is fed to the battery cell 2 through a particle size adjusting means 26 when activating the pump 25. The electrolyte fed to the battery cell 2 passes through the inside of the battery cell 2 from a downward side, is discharged to an upward, and is returned to the negative-electrode electrolyte tank 22 through the negative-electrode return pipe 24. According to this, the negative-electrode electrolyte circulates in an arrow B direction in the drawing.

According to this, a charge/discharge reaction is performed in the battery cell 2, and electric power can be taken out or stored. The charge/discharge reaction in the battery cell 2 is as follows.

### Positive-electrode cell

Charge: V⁴⁺ → V⁵⁺ + e⁻
Discharge: V⁵⁺ + e⁻ → V⁴⁺
Negative-electrode cell
Charge: V³⁺ + e⁻ → V²⁺
Discharge: V²⁺ → V³⁺ + e⁻

Hereinafter, the positive electrode 10, the negative electrode 20, the membrane 30, the positive-electrode electrolyte, the negative-electrode electrolyte, and the particle size adjusting means 16 and 26 will be described in detail.

### (Positive Electrode and Negative Electrode)

Known electrodes can be used as the positive electrode 10 and the negative electrode 20. Although not particularly limited, it is preferable that the electrodes only provide a site at which a redox reaction occurs when vanadium in the electrolyte passes through the inside of the battery cell 2 without reacting with vanadium, have a structure and a shape with excellent electrolyte permeability, have a very wide surface area, and have low electric resistance. In addition, it is preferable that the electrodes have excellent affinity with the electrolyte (aqueous solution) from the viewpoints of activating a redox reaction, and have a great hydrogen overvoltage and a great oxygen overvoltage from the viewpoint of preventing water dissolution as an auxiliary reaction from occurring. For example, examples of the electrodes include a carbon material such as a carbon felt or a graphitized carbon material, and a mesh-shaped titanium or zirconium substrate coated with a novel metal or carbon.

### (Membrane)

As the membrane 30, a known membrane can be used. Although not particularly limited, for example, an ion exchange membrane formed from an organic polymer, and any of a cation exchange membrane and an anion exchange membrane can be used.

Examples of the cation exchange membrane include a cation exchange membrane obtained through sulfonation of a styrene-divinylbenzene copolymer, a cation exchange membrane in which a sulfonic acid group is introduced into a copolymer of tetrafluoroethylene and perfluorosulfonyl ethoxy vinyl ether, a cation exchange membrane formed from a copolymer of tetrafluoroethylene and a perfluorovinyl ether having a carboxyl group in a side chain, a cation exchange membrane in which a sulfonic acid group is introduced into an aromatic polysulfone copolymer, and the like.

Examples of the anion exchange membrane include an aminated anion exchange membrane obtained by introducing a chloromethyl group into a styrene-divinylbenzene copolymer, an anion exchange membrane obtained through conversion of a vinylpyridine-divinylbenzene copolymer into quaternary pyridinium, an aminated anion exchange membrane obtained by introducing a chloromethyl group into an aromatic polysulfone copolymer, and the like.

### (Positive-Electrode Electrolyte)

The positive-electrode electrolyte contains a tetravalent and/or pentavalent vanadium compound that is dissolved, and a tetravalent and/or pentavalent vanadium compound that is dispersed as a particle. In the positive-electrode electrolyte, a total of vanadium concentration of the vanadium compounds (hereinafter, may be referred to simply as "vanadium concentration") is 1.7 mol/L or more, and preferably 2.5 mol/L to 4.0 mol/L. When the vanadium concentration is 1.7 mol/L or more, it is possible to realize high battery capacity and energy density. When the vanadium concentration is more than 4.0 mol/L, precipitation of the vanadium compound becomes excessive or a particle size of the particle-shaped vanadium compound becomes excessively large, and there is a tendency that the charge/discharge reaction does not sufficiently progress. Accordingly, the range is not preferable.

Note that, the vanadium concentration is obtained from a result obtained by ICP emission spectroscopy. Specifically, sulfuric acid or water is added to the electrolyte to completely dissolve the particle-shaped vanadium compound and to appropriately dilute the electrolyte, and then a vanadium ion concentration of the solution after dilution is measured with the ICP emission spectroscopy. The vanadium concentration of the electrolyte is calculated from a dilution magnification. A measurement method of the vanadium concentration is also applied to the negative-electrode electrolyte to be described later.

A sulfuric acid concentration of the positive-electrode electrolyte is preferably 0.5 mol/L to 6 mol/L, and more preferably 1 mol/L to 3 mol/L. When the sulfuric acid concentration of the positive electrolyte is excessively small, vanadium pentoxide (V₂O₅) that is a pentavalent vanadium compound is likely to precipitate on the positive-electrode cell 11 side.

Note that, additives such as oxo acid including nitric acid, a protective colloid agent, and a complexing agent which are known in the related art may be contained in the positive-electrode electrolyte to prevent precipitation of the precipitates.

### (Negative-Electrode Electrolyte)

The negative-electrode electrolyte contains a divalent and/or trivalent vanadium compound that is dissolved, and a divalent and/or trivalent vanadium compound that is dispersed as a particle. A total of vanadium concentration of the vanadium compounds is 1.7 mol/L or more, and preferably 2.5 mol/L or more to 4.0 mol/L or less. When the vanadium concentration is 1.7 mol/L or more, it is possible to realize high battery capacity and energy density. When the vanadium concentration is more than 4.0 mol/L, precipitation of the vanadium compound becomes excessive or a particle size of the particle-shaped vanadium compound becomes excessively large, and there is a tendency that the charge/discharge reaction does not sufficiently progress. Accordingly, the range is not preferable. Note that, the concentration (mol/L) of vanadium in the positive-electrode electrolyte and the negative-electrode electrolyte is a concentration (mol/L) of vanadium atoms in the electrolyte.

Typically, with regard to the vanadium electrolyte, a tetravalent vanadium ion solution is adjusted by dissolving a vanadium sulfate oxide in a sulfuric acid aqueous solution, and the vanadium ion solution is electrolyzed to obtain a vanadium ion solution having a different valence number. For example, in the positive-electrode electrolyte, a solution containing pentavalent vanadium ions (VO₂⁺) that is a positive electrode active material is adjusted through an oxidation reaction of tetravalent vanadium ions (VO²⁺). In the negative-electrode electrolyte, a solution containing divalent vanadium ions (V²⁺) that is a negative electrode active material is adjusted through a reduction reaction of trivalent vanadium ions (V³⁺).

A sulfuric acid concentration of the negative-electrode electrolyte is preferably 0.5 mol/L or more to 6 mol/L or less, and more preferably 1 mol/L or more to 3 mol/L or less. When the sulfuric acid concentration of the negative-electrode electrolyte is excessively large, vanadium sulfate (V₂(SO₄)₃) that is a trivalent vanadium compound is likely to precipitate on the negative-electrode cell 21 side.

Note that, additives such as oxo acid including nitric acid, a protective colloid agent, and a complexing agent which are known in the related art may be contained in the negative-electrode electrolyte to prevent precipitation of the precipitates.

### (Particle size adjusting means)

As described above, the vanadium concentration of the electrolyte that is used in this embodiment is as high as 1.7 mol/L, and thus precipitation of the vanadium compound is likely to be excessively great and the particle size of the particle-shaped vanadium compound is likely to be excessively large. Here, in the redox-flow battery system 1 according to this embodiment, the particle size adjusting means 16 and 26, which adjust the particle size of the particle-shaped vanadium compound to be small, are disposed at a part of the positive-electrode outgoing pipe 13 and the negative-electrode outgoing pipe 23 (hereinafter, may be referred to simply as "outgoing pipes 13 and 23") which constitute an electrolyte circulation route.

Specifically, it is preferable that the particle size adjusting means 16 and 26 adjust an accumulative 90% particle size (D90) of a volume-based particle size distribution of the particle-shaped vanadium compound to 5 µm or less, and more preferably 1 µm or less. Here, the accumulative distribution diameter (D90) represents a particle size of which an integrated distribution in a particle size distribution measurement of the particle-shaped vanadium compound by a laser diffraction method converges to 90%.

As described above, when the particle size adjusting means 16 and 26 are respectively disposed in the outgoing pipes 13 and 23, in the vanadium compound of which the particle size enlarges due to crystal growth in the course of precipitation, the particle size is adjusted to be small before supply to the battery cell 2, and preferably, the accumulative 90% particle size (D90) of the volume-based particle size distribution is adjusted to 5 µm or less. As a result, the vanadium compound can continuously contribute to the electrode reaction (charge/discharge reaction), and it is possible to stably obtain high energy density and battery capacity based on the concentration thereof.

The particle size adjusting means 16 and 26 are not particularly limited as long as it is possible to adjust the particle size of the particle-shaped vanadium compound to be small, and examples thereof include homogenizers such as a stirring-type homogenizer, an ultrasonic homogenizer, and a high-pressure homogenizer, and a dispersing and crushing device such as a bead mill.

Note that, in the example illustrated in Fig. 1, an example in which the particle size adjusting means 16 and 26 are respectively disposed in the outgoing pipes 13 and 23, but the particle size adjusting means 16 and 26 may be disposed in the positive-electrode return pipe 14 and the negative-electrode return pipe 24 (hereinafter, may be referred to simply as "return pipes 14 and 24") which constitutes the electrolyte circulation route, or may be disposed in both the outgoing pipes 13 and 23, and the return pipes 14 and 24. From the viewpoint of inhibiting the particle-shaped vanadium compound of which the particle size enlarges from being supplied into the battery cell 2, it is preferable that the particle size adjusting means 16 and 26 are disposed in the outgoing pipes 13 and 23. In addition, from the viewpoint of preferably adjusting the particle size of the particle-shaped vanadium compound, it is preferable that the particle size adjusting means 16 and 26 are disposed in both the outgoing pipes 13 and 23, and the return pipes 14 and 24. In addition, the particle size adjusting means 16 and 26 may be disposed in the positive-electrode electrolyte tank 12 and the negative-electrode electrolyte tank 22.

### <Operation Method of Redox-Flow Battery System>

An operation method of a redox-flow battery system according to this embodiment is an operation method of a redox-flow battery system that performs charge/discharge by circulating an electrolyte containing vanadium as an active material to the battery cell. In addition, the operation method includes a particle size adjusting process of making the particle size of the vanadium compound dispersed as a particle be small.

Specifically, in the particle size adjusting process, it is preferable to adjust the accumulative distribution diameter (D90) of the vanadium compound dispersed as a particle to 5 µm or less.

When including the particle size adjusting process, in the vanadium compound of which the particle size enlarges due to crystal growth in the course of precipitation, the particle size is adjusted to be small before supply to the battery cell 2, and preferably, the accumulative 90% particle size (D90) of the volume-based particle size distribution is adjusted to 5 µm or less. As a result, the vanadium compound can continuously contribute to the electrode reaction (charge/discharge reaction), and it is possible to stably obtain high energy density and battery capacity based on the concentration thereof.

### EXAMPLES

Hereinafter, the invention will be described in more detail with reference to examples, but the invention is not limited to the examples.

### [Example 1]

As the battery cell 2, an experiment single cell was prepared as follows. A carbon felt (area: 250 cm²) was used as the positive electrode 10 and the negative electrode 20, an ion exchange membrane was used as the membrane 30, 250 mL of 3.0 mol/L-H₂SO₄ aqueous solution in which the tetravalent vanadium concentration is 1.7 mol/L was used as the positive-electrode electrolyte, and 250 mL of 3.0 mol/L-H₂SO₄ aqueous solution in which the vanadium concentration is 1.7 mol/L was used as the negative-electrode electrolyte. In addition, in the redox-flow battery system 1 using the battery cell 2, homogenizers as the particle size adjusting means 16 and 26 were respectively disposed in the outgoing pipes 13 and 23, and charge was performed in a current density 1000 A/m² while respectively circulating and supplying the positive-electrode electrolyte and the negative-electrode electrolyte to the positive-electrode cell 11 and the negative-electrode cell 21 in an amount of 200 mL/minute. When a voltage reached 1.6 V, charge was stopped and discharge was subsequently performed in 1000 A/m². When a voltage reaches 1.0 V, discharge was terminated. Charge and discharge were repeated for 1000 cycles. Note that, the accumulative 90% particle size (D90) of the volume-based particle size distribution of the vanadium compound in the electrolyte was adjusted to 5 µm or less by the particle size adjusting means 16 and 26 (homogenizer).

### [Example 2]

Charge and discharge were repeated in a similar manner as in Example 1 except that the vanadium concentration of the positive-electrode electrolyte and the negative-electrode electrolyte was set to 2.8 mol/L.

### [Example 3]

Charge and discharge were repeated in a similar manner as in Example 1 except that the vanadium concentration of the positive-electrode electrolyte and the negative-electrode electrolyte was set to 4.0 mol/L.

### [Example 4]

Charge and discharge were repeated in a similar manner as in Example 2 except that the particle size adjusting means 16 and 26 (homogenizer) were disposed in the outgoing pipes 13 and 23, and the return pipes 14 and 24, respectively.

### [Comparative Example 1]

Charge/discharge was repeated in a similar manner as in Example 1 by using a redox-flow battery system having the similar configuration as in Example 1 except that the particle size adjusting means were not disposed.

### [Comparative Example 2]

Charge/discharge was repeated in a similar manner as in Example 2 by using a redox-flow battery system having the similar configuration as in Example 2 except that the particle size adjusting means were not disposed.

### [Comparative Example 3]

Charge/discharge was repeated in a similar manner as in Example 3 by using a redox-flow battery system having the similar configuration as in Example 3 except that the particle size adjusting means were not disposed.

### [Result and Consideration]

In the battery cells 2 of Examples 1 to 4 and Comparative Examples 1 to 3, an energy density and a battery capacity at a first cycle and an energy density and a battery capacity after 1000 cycles were compared with each other. Note that, the energy density (Wh/m³) was calculated from discharge average voltage (V) × discharge time (h) × current value (A) ÷ electrolyte volume (m³). The battery capacity (A·h) was calculated from discharge current (A) × discharge time (h).

In Example 1 in which the vanadium concentration of the electrolyte was 1.7 mol/L, and the particle size adjusting means 16 and 26 were respectively disposed in the outgoing pipes 13 and 23, a decrease in the energy density was approximately 5%, and a decrease in the battery capacity was approximately 5% after 1000 cycles with respect to the first cycle. In contrast, in Comparative Example 1 in which the particle size adjusting means were not disposed, the decrease in the energy density was approximately 12% and the decrease in the battery capacity was approximately 12%.

In Example 2 in which the vanadium concentration of the electrolyte was 2.8 mol/L, and the particle size adjusting means 16 and 26 were respectively disposed in the outgoing pipes 13 and 23, the decrease in the energy density was approximately 15%, and a decrease in the battery capacity was approximately 15% after 1000 cycles with respect to the first cycle. In contrast, in Comparative Example 2 in which the particle size adjusting means were not disposed, the decrease in the energy density was approximately 31% and the decrease in the battery capacity was approximately 31%.

In Example 3 in which the vanadium concentration of the electrolyte was 4.0 mol/L, and the particle size adjusting means 16 and 26 were respectively disposed in the outgoing pipes 13 and 23, the decrease in the energy density was approximately 29%, and a decrease in the battery capacity was approximately 29% after 1000 cycles with respect to the first cycle. In contrast, in Comparative Example 3 in which the particle size adjusting means were not disposed, the decrease in the energy density was approximately 54% and the decrease in the battery capacity was approximately 54%.

In addition, in Example 4 in which the vanadium concentration of the electrolyte was 2.8 mol/L, and the particle size adjusting means 16 and 26 were respectively disposed in both the outgoing pipes 13 and 23 and the return pipes 14 and 24, the decrease in the energy density was approximately 11%, and a decrease in the battery capacity was approximately 11% after 1000 cycles with respect to the first cycle. It was confirmed that the decreases in the energy density and the battery capacity can be further suppressed in comparison to Example 2 in which the particle size adjusting means 16 and 26 were disposed only in the outgoing pipes 13 and 23.

In addition, a variation was hardly exhibited on surfaces of the electrodes 10 and 20, or a surface of the membrane 30 of the battery cells 2 in Examples 1 to 4 in which the particle size adjusting means 16 and 26 were disposed. In contrast, on surfaces of the electrodes 10 and 20, or a surface of the membrane 30 of the battery cells 2 in Comparative Examples 1 to 3 in which the particle size adjusting means were not disposed, it was confirmed that the higher the vanadium ion concentration in the electrolyte was, the stronger precipitates of the vanadium compound were fixed. In the battery cells 2 of Comparative Examples 1 to 3, it is considered that the charge/discharge reaction did not progress due to the fixed vanadium compound, and thus the energy density and the battery capacity decreased.

### EXPLANATION OF REFERENCE NUMERALS

- 1: REDOX-FLOW BATTERY
- 2: BATTERY CELL
- 3: AC/DC CONVERTER
- 4: AC POWER SUPPLY
- 5: LOAD POWER SUPPLY
- 10: POSITIVE ELECTRODE
- 11: POSITIVE-ELECTRODE CELL
- 12: POSITIVE-ELECTRODE ELECTROLYTE TANK
- 13: POSITIVE-ELECTRODE OUTGOING PIPE
- 14: POSITIVE-ELECTRODE RETURN PIPE
- 15: PUMP
- 16: PARTICLE SIZE ADJUSTING MEANS
- 20: NEGATIVE ELECTRODE
- 21: NEGATIVE-ELECTRODE CELL
- 22: NEGATIVE-ELECTRODE ELECTROLYTE TANK
- 23: NEGATIVE-ELECTRODE OUTGOING PIPE
- 24: NEGATIVE-ELECTRODE RETURN PIPE
- 25: PUMP
- 26: PARTICLE SIZE ADJUSTING MEANS
- 30: MEMBRANE

## Claims

1. A redox-flow battery system that performs charge/discharge by circulating an electrolyte containing vanadium as an active material to a battery cell, the redox-flow battery system comprising:
a particle size adjusting means that is disposed in a circulation route of the electrolyte and adjusts a particle size of a vanadium compound dispersed as a particle to be small,
wherein the electrolyte includes a vanadium compound that is dissolved, and the vanadium compound that is dispersed as a particle, and a total of vanadium concentration of the vanadium compounds is 1.7 mol/L or more.

2. The redox-flow battery system according to claim 1,
wherein the particle size adjusting means adjusts an accumulative 90% particle size (D90) of a volume-based particle size distribution of the vanadium compound dispersed as the particle to 5 µm or less.

3. The redox-flow battery system according to claim 1 or 2,
wherein the circulation route includes an electrolyte tank that stores the electrolyte, an outgoing pipe through which the electrolyte is fed from the electrolyte tank to the battery cell, and a return pipe through which the electrolyte is returned from the battery cell to the electrolyte tank, and
the particle size adjusting means is disposed in one or both of the outgoing pipe and the return pipe.

4. The redox-flow battery system according to any one of claims 1 to 3,
wherein in the electrolyte, a total of vanadium concentration of the vanadium compounds is 2.5 mol/L or more to 4.0 mol/L or less.

5. The redox-flow battery system according to any one of claims 1 to 4,
wherein the particle size adjusting means is a homogenizer.

6. The redox-flow battery system according to any one of claims 1 to 5,
wherein in the electrolyte, a positive-electrode electrolyte contains one or both of tetravalent and pentavalent vanadium compounds, and a negative-electrode electrolyte contains one or both of divalent and trivalent vanadium compounds.

7. A method of operating a redox-flow battery system that performs charge/discharge by circulating an electrolyte containing vanadium as an active material to a battery cell, the method comprising:
a particle size adjusting process of making a particle size of a vanadium compound dispersed as a particle to be small,
wherein the electrolyte includes a vanadium compound that is dissolved, and the vanadium compound that is dispersed as a particle, and a total of vanadium concentration of the vanadium compounds is 1.7 mol/L or more.

8. The method of operating a redox-flow battery system according to claim 7,
wherein in the particle size adjusting process, an accumulative 90% particle size (D90) of a volume-based particle size distribution of the vanadium compound dispersed as a particle is adjusted to 5 µm or less.
